# FASCICULE DE BREVET EUROPEEN

(11) **EP 2 943 676 B1**
(45) Date de publication et mention de la délivrance du brevet: **02.01.2019**
(21) Numéro de dépôt: 14703115.7
(22) Date de dépôt: 08.01.2014
(51) Int. Cl.: F02K 9/50, F02K 9/97

(54) **SYSTÈME ET PROCÉDÉ D'ALIMENTATION D'UN MOTEUR-FUSÉE**
SYSTEM UND VERFAHREN ZUR VERSORGUNG EINES RAKETENTRIEBWERKS
SYSTEM AND METHOD FOR SUPPLYING A ROCKET ENGINE

(30) Priorité: 11.01.2013 FR 1350240
(43) Date de publication de la demande: 18.11.2015
(73) Titulaire: ARIANEGROUP SAS, 75015 Paris (FR)
(72) Inventeur: VUILLAMY, Didier, 76230 Quincampoix (FR); ROZ, Gérard, 27510 Pressagny L'orgueilleux (FR)
(74) Mandataire: Calvo de Nó, Rodrigo
(86) Numéro de dépôt international: PCT/FR2014/050024
(87) Numéro de publication internationale: WO 2014/108635

(56) Documents cités:
- EP-A1- 1 241 341
- US-A- 3 143 855
- US-A- 3 570 249
- US-A1- 2003 014 965
- US-B1- 7 784 269

## Description

### Arrière-plan de l'invention

La présente invention concerne le domaine de l'alimentation d'un moteur-fusée en ergols liquides.

Dans la description qui suit les termes "amont" et "aval" sont définis par rapport au sens de circulation normal des ergols dans les circuits d'alimentation d'un moteur-fusée.

Le système d'alimentation d'un moteur-fusée en ergols liquides comprend typiquement, pour chaque ergol liquide, un réservoir et un circuit d'alimentation connecté à ce réservoir pour transférer l'ergol du réservoir à au moins une chambre propulsive dans laquelle les ergols sont mélangés et brûlés pour générer une poussée en réaction à l'accélération des gaz de combustion dans une tuyère.

Lors du fonctionnement d'un tel moteur-fusée, le réservoir de chaque ergol se vide progressivement de son contenu liquide. Or, pour assurer l'écoulement de chaque ergol, à travers le circuit d'alimentation, vers la chambre propulsive, il est nécessaire de maintenir la pression interne de chaque réservoir au-dessus d'un seuil minimum. Dans l'état de la technique, des différentes alternatives sont connues pour assurer cette pressurisation des réservoirs pendant leur vidange, mais elles présentent des inconvénients divers en termes de masse et de complexité.

D'autre part, il est aussi souvent important d'éviter une montée excessive de la pression interne de chaque réservoir, notamment pour éviter une rupture du réservoir. Toutefois, au moins quand les ergols sont des ergols cryogéniques, il est difficile d'éviter l'évaporation graduelle des ergols liquides dans les réservoirs à cause de l'absorption de chaleur à travers les parois des réservoirs, évaporation qui entraîne une montée de la pression dans les réservoirs. Essayer de résoudre ce problème par une plus grande isolation thermique des réservoirs entraîne toutefois des inconvénients importants, et notamment un incrément important de leur masse.

En outre, le réchauffement graduel des ergols dans les réservoirs comporte d'autres inconvénients. En particulier, l'augmentation de la pression de saturation de chaque ergol avec ce réchauffement, réduit les marges à la cavitation de pompes en aval de ces réservoirs et augmente ainsi le risque de phénomènes de cavitation dans ces pompes. La publication de demande de brevet US 2003/0014965 divulguait un système et un procédé d'alimentation d'un moteur-fusée en ergols cherchant à diminuer ce dernier inconvénient.

### Objet et résumé de l'invention

Les systèmes et procédés dans la présente invention, tels que définis dans la revendication 1 et la revendication 12, visent à remédier à ces inconvénients. En particulier, la présente description concerne un système d'alimentation d'un moteur-fusée en ergols, comprenant un premier réservoir, un deuxième réservoir, et un premier circuit d'alimentation connecté au premier réservoir, qui permette de refroidir un deuxième ergol liquide extrait du deuxième réservoir, afin notamment de compenser un éventuel réchauffement graduel du deuxième ergol dans le réservoir.

Selon l'invention, ce but est atteint grâce au fait que le premier circuit comprend en outre un branchement traversant un premier échangeur de chaleur intégré dans le deuxième réservoir, ledit branchement étant connecté au premier réservoir en aval dudit premier échangeur de chaleur.

Grâce à ces dispositions, avec un deuxième ergol liquide au point de saturation sensiblement plus élevé que le premier ergol liquide, il est possible, dans ce premier échangeur de chaleur, de transférer de la chaleur du deuxième ergol au premier ergol, de manière à faire passer à l'état gazeux le premier ergol dérivé à travers le branchement, tout en refroidissant le deuxième ergol. Par ailleurs, le débit du premier ergol dérivé à travers ce branchement peut ainsi être réinjecté dans le premier réservoir et contribuer, à l'état gazeux, à maintenir la pression interne du premier réservoir pendant sa vidange.

Suivant un deuxième aspect, ledit système d'alimentation comprend aussi un deuxième circuit d'alimentation connecté au deuxième réservoir et comportant une pompe. Le refroidissement du deuxième ergol dans le deuxième réservoir grâce au premier échangeur de chaleur, aide à éviter des phénomènes de cavitation dans cette pompe du deuxième circuit d'alimentation.

Suivant un troisième aspect, ledit branchement peut aussi comprendre un conduit de contournement dudit premier échangeur de chaleur. Ce conduit de contournement, qui peut comporter une vanne de régulation de débit, permet à une partie du premier ergol dérivé à travers ce branchement de contourner au moins ledit premier échangeur de chaleur. En se mélangeant ensuite avec le premier ergol sortant de ce premier échangeur de chaleur, il permet d'en réduire la température avant sa réinjection dans le premier réservoir. En particulier si ce conduit de contournement comporte une vanne de régulation de débit, il devient ainsi possible de réguler plus précisément l'évolution de la pression du premier ergol dans le premier réservoir.

Afin d'assurer la circulation de retour du premier ergol vers le premier réservoir à travers ledit branchement, celui-ci peut être situé en aval d'une pompe faisant aussi part du premier circuit d'alimentation. Cette pompe peut servir donc aussi à faire circuler le premier ergol en même temps vers la chambre propulsive, et être, par exemple, une pompe électrique ou une turbopompe. Toutefois, alternativement, le circuit d'alimentation pourrait être configuré de manière à assurer la circulation du premier ergol vers la chambre propulsive par d'autres moyens, comme par exemple par pressurisation d'un réservoir en amont. Pour assurer la circulation de retour du premier ergol vers le premier réservoir à travers ce branchement même dans ce cas, ce branchement peut lui-même comprendre un dispositif de circulation forcée du premier ergol.

Suivant un quatrième aspect, ledit premier échangeur de chaleur peut être intégré dans un entonnoir de sortie du deuxième réservoir, de manière à refroidir particulièrement le deuxième ergol sortant du deuxième réservoir, et ainsi supprimer plus efficacement les phénomènes de cavitation dans une pompe éventuellement connectée en aval.

Suivant un cinquième aspect, le premier circuit peut comprendre en outre au moins un deuxième échangeur de chaleur intégré dans le deuxième réservoir, de manière à mieux refroidir le deuxième ergol sortant du deuxième réservoir. Ce deuxième échangeur peut notamment être aussi intégré dans un entonnoir de sortie du deuxième réservoir, éventuellement dans le même que le premier échangeur. En outre, ledit premier circuit peut aussi comprendre un troisième échangeur de chaleur intégré dans le deuxième réservoir, en amont du deuxième échangeur de chaleur, pour refroidir le deuxième ergol dans le deuxième réservoir et ainsi compenser son réchauffement graduel par absorption de chaleur à travers des parois du deuxième réservoir, de manière à éviter une montée excessive de la pression à l'intérieur du deuxième réservoir. En particulier quand la température de saturation du deuxième ergol, dans le deuxième réservoir, est considérablement plus élevée que celle du premier ergol, dans le premier circuit, ces deuxième et troisième échangeurs peuvent offrir un important refroidissement supplémentaire, sans que le premier ergol traversant ces échangeurs passe nécessairement en phase gazeuse.

Suivant un sixième aspect, le premier circuit d'alimentation peut comprendre en outre, en amont dudit branchement de retour, un autre échangeur de chaleur apte à être connecté à une source de chaleur, telle que, par exemple, une pile à combustible, une batterie ou un circuit électronique, et permettant ainsi son refroidissement.

La présente description concerne aussi un procédé d'alimentation d'un moteur-fusée en ergols liquides, comprenant l'extraction d'un débit d'un premier ergol liquide d'un premier réservoir à travers un premier circuit d'alimentation, la dérivation d'une partie dudit débit du premier ergol liquide à travers un branchement du premier circuit d'alimentation, le passage à l'état gazeux du premier ergol liquide dérivé à travers ledit branchement dans un échangeur de chaleur intégré dans un deuxième réservoir contenant un deuxième ergol liquide à une température plus élevée que la température de saturation du premier ergol liquide dans le branchement, et l'extraction d'un débit du deuxième ergol liquide du deuxième réservoir à travers un deuxième circuit d'alimentation. Eventuellement, au moins une partie du premier ergol dérivé à travers ledit branchement peut être réinjectée, à l'état gazeux, dans le premier réservoir. Le premier ergol liquide peut être de l'hydrogène liquide et le deuxième ergol liquide de l'oxygène liquide.

### Brève description des dessins

L'invention sera bien comprise et ses avantages apparaîtront mieux, à la lecture de la description détaillée qui suit, de plusieurs modes de réalisation représentés à titre d'exemples non limitatifs. La description se réfère aux dessins annexés sur lesquels :
- la figure 1 illustre schématiquement un engin comprenant un moteur-fusée avec un système d'alimentation suivant un premier mode de réalisation ;
- la figure 2 illustre schématiquement un entonnoir de sortie d'un réservoir d'ergol du système d'alimentation de la figure 1 ;
- la figure 3 illustre schématiquement un engin comprenant un moteur-fusée avec un système d'alimentation suivant un deuxième mode de réalisation ;
- la figure 4 illustre schématiquement un entonnoir de sortie d'un réservoir d'ergol du système d'alimentation de la figure 3 ;
- la figure 5 illustre schématiquement un engin comprenant un moteur-fusée avec un système d'alimentation suivant un troisième mode de réalisation ;
- la figure 6 illustre schématiquement un engin comprenant un moteur-fusée avec un système d'alimentation suivant un quatrième mode de réalisation ;
- la figure 7 illustre schématiquement un engin comprenant un moteur-fusée avec un système d'alimentation suivant un cinquième mode de réalisation ;
- la figure 8 illustre schématiquement un engin comprenant un moteur-fusée avec un système d'alimentation suivant un sixième mode de réalisation ; et
- la figure 9 illustre schématiquement un engin comprenant un moteur-fusée avec un système d'alimentation suivant un septième mode de réalisation.

### Description détaillée de l'invention

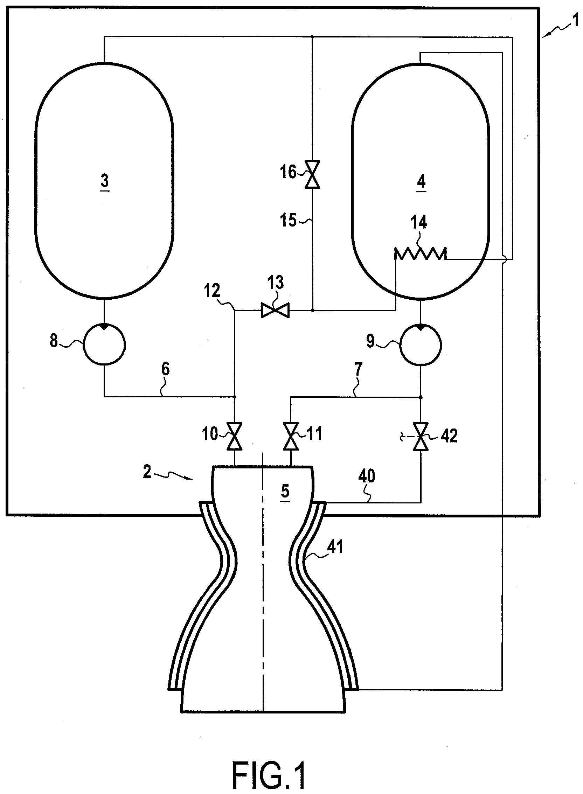

Un engin 1, pouvant être, par exemple, un étage d'un lanceur spatial, est illustré schématiquement sur la figure 1. Pour sa propulsion, cet engin 1 comprend un moteur-fusée 2 à ergols liquides, avec un système d'alimentation comprenant un premier réservoir 3 pour un premier ergol, un deuxième réservoir 4 pour un deuxième ergol, une chambre propulsive 5 pour la combustion d'un mélange des deux ergols et l'accélération des gaz de combustion de ce mélange, un premier circuit d'alimentation 6 relié à la base du premier réservoir 3 et à la chambre propulsive 5 afin de lui fournir le premier ergol, et un deuxième circuit d'alimentation 7 relié à la base du deuxième réservoir 4 à la chambre propulsive 5 afin de lui fournir le deuxième ergol. Ces premier et deuxième ergols peuvent être des ergols cryogéniques tels que l'hydrogène et l'oxygène liquide, ou d'autres ergols liquides, mais en tout cas la température de saturation du deuxième ergol dans le deuxième réservoir 4 est sensiblement supérieure à celle du premier ergol dans le premier circuit 6 en aval de la pompe 8. Chacun des circuits d'alimentation 6,7 comprend une pompe 8,9 pour assurer la circulation de l'ergol respectif à travers chaque circuit d'alimentation 6,7, et des vannes de sortie 10,11 pour ouvrir et fermer l'écoulement des ergols vers la chambre propulsive 5. Ces pompes 8,9 peuvent être, par exemple, des pompes électriques, ou bien des turbopompes.

Le premier circuit d'alimentation 6 comprend, en aval de la pompe 8, un branchement 12 de retour vers le sommet du premier réservoir 3. Ce branchement de retour comprend une vanne 13 et un premier échangeur de chaleur 14 intégré dans le deuxième réservoir 4. En outre, ce branchement de retour comprend aussi, en aval de la vanne 13, un conduit 15 de contournement du premier échangeur de chaleur 14, avec une vanne 16. Les vannes 13 et 16 peuvent être des vannes à débit variable, permettant ainsi de réguler avec précision l'évolution des débits à travers le branchement 12 et le conduit de contournement 15.

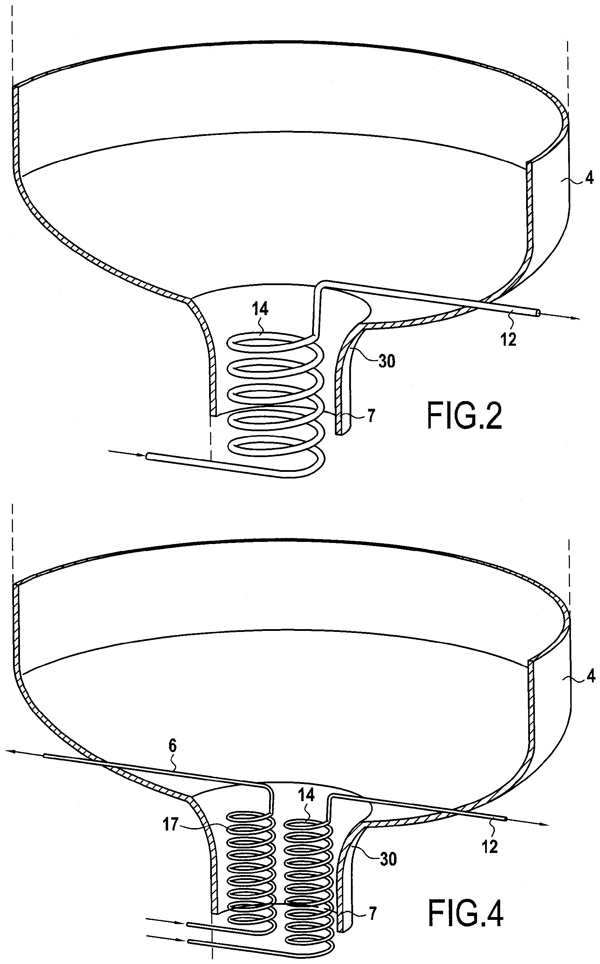

L'échangeur de chaleur 14 est adjacent à la connexion du deuxième réservoir 4 au deuxième circuit 7. Plus spécifiquement, comme illustré sur la figure 2, l'échangeur de chaleur 14 est intégré dans un entonnoir 30 de sortie du deuxième réservoir 4 vers le deuxième circuit 7, de manière à faciliter le transfert de chaleur du débit du deuxième ergol sortant du deuxième réservoir 4 au débit du premier ergol s'écoulant à travers cet échangeur de chaleur.

Le deuxième circuit 7 comprend aussi, en aval de la pompe 9, (voir figure 1) un branchement 40 de retour vers le sommet du deuxième réservoir 4, traversant un autre échangeur de chaleur 41 disposé autour de la chambre propulsive 5 de manière à être chauffé par rayonnement par celle-ci. Ce branchement 40 comprend aussi, en amont de l'échangeur de chaleur 41, une vanne 42, pouvant être une vanne de débit variable, permettant ainsi une régulation précise du débit à travers le branchement 40.

En fonctionnement, pendant que les deux pompes 8, 9 pompent les deux ergols à partir des réservoirs respectifs 3,4, et à travers les circuits d'alimentation respectifs 6,7, vers la chambre propulsive 5, une partie du débit du premier ergol est dérivée du premier circuit 6 à travers le branchement 12.

Le débit dérivé est régulé par la vanne 13, qui peut être commandée par une unité de commande (non illustrée) en fonction d'un ensemble de données physiques captées par des capteurs (non illustrés) tels que, par exemple, des capteurs de pression et de température dans les deux réservoirs 3,4.

Une partie de ce débit dérivé traverse l'échangeur 14, où il est chauffé par le deuxième ergol, passant ainsi en phase gazeuse. Une autre partie de ce débit dérivé, régulée par la vanne 16, contourne toutefois l'échangeur 14 à travers le conduit 15, pour ensuite rejoindre le reste du débit dérivé en aval de l'échangeur 14. La vanne 16 du conduit de contournement 15, commandée par l'unité de commande en fonction des données des capteurs, permet ainsi la régulation de la température du débit dérivé du premier ergol avant sa réinjection dans le premier réservoir 3, évitant notamment de le réinjecter à une température trop élevée. La réinjection de ce débit dérivé à l'état gazeux permet néanmoins d'occuper le volume évacué par le premier ergol alimentant la chambre propulsive 5, pour ainsi maintenir la pression à l'intérieur du premier réservoir 3.

Simultanément, le transfert de chaleur dans l'échangeur 14 refroidit le débit du deuxième ergol qui est évacué du deuxième réservoir 4 à travers l'entonnoir 30. Ainsi, le débit du deuxième ergol qui arrive à la pompe 9 est sensiblement refroidi, ce qui permet de réduire des phénomènes de cavitation dans cette pompe 9. Le refroidissement du deuxième ergol évacué du deuxième réservoir 4 offre aussi une plus grande marge de fluctuation de la température du deuxième ergol dans le deuxième réservoir 4.

Ainsi, par exemple, pour un moteur-fusée 2 alimenté en hydrogène et oxygène liquides avec une poussée F de 2 kN, le passage en phase gazeuse, dans l'échangeur 14, du débit d'hydrogène liquide Q_{LH2} dérivé pour assurer la pressurisation du premier réservoir 3 absorbe une puissance calorifique Pᵥ de l'ordre de 1 kW. Le débit d'oxygène liquide Q_{LOX} évacué du deuxième réservoir 4 à travers l'entonnoir 30 pour alimenter la chambre propulsive étant de l'ordre de 0,4 kg/s, sa température T_{LOX} va diminuer d'environ 1,5 K, ce qui correspond à une diminution de sa pression de saturation p_{LOX,sat} d'entre 30 et 40 kPa.

Simultanément, une partie du débit du deuxième ergol extrait du deuxième réservoir 4 à travers l'entonnoir 30 et le deuxième circuit 7 est dérivée à travers le branchement 40 et chauffée dans l'échangeur 41 par le rayonnement thermique de la chambre propulsive 5, de telle manière qu'il passe en phase gazeuse avant d'être réinjectée dans le deuxième réservoir 4, afin d'y maintenir la pression interne. Ce débit est régulé par la vanne 42, qui peut aussi être commandée par l'unité de commande susmentionnée en fonction d'un ensemble de données physiques fournies par des capteurs tels que, par exemple, des capteurs de pression et de température dans les deux réservoirs 3,4.

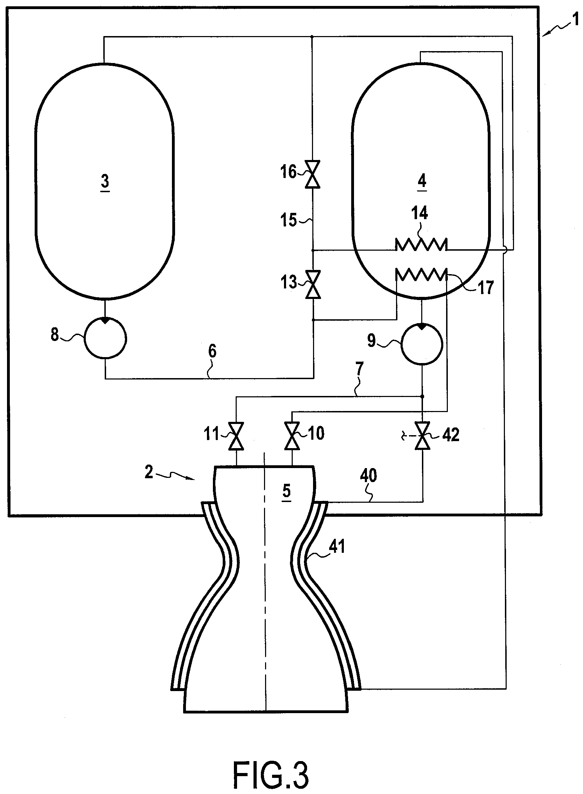

Un engin 1 suivant un deuxième mode de réalisation est illustré sur la figure 3. Le système d'alimentation du moteur-fusée 2 de cet engin 1 diffère de celui du premier mode de réalisation en ce qu'il comporte un deuxième échangeur de chaleur 17 dans le premier circuit d'alimentation 6. Les autres éléments de cet engin 1 sont essentiellement équivalents à ceux du premier mode de réalisation, et reçoivent les mêmes chiffres de référence. Ce deuxième échangeur de chaleur 17 forme partie du tronçon du premier circuit d'alimentation 6 débouchant finalement dans la chambre propulsive 5. Comme illustré sur la figure 4, il est aussi adjacent à la connexion du deuxième réservoir 4 au deuxième circuit 7, et plus spécifiquement intégré dans l'entonnoir 30 de sortie du deuxième réservoir 4 vers le deuxième circuit 7, comme le premier échangeur de chaleur 14, de manière à faciliter le transfert de chaleur, du débit du deuxième ergol sortant du deuxième réservoir 4, au débit du premier ergol s'écoulant à travers ce deuxième échangeur de chaleur 17.

En fonctionnement, le débit du premier ergol dérivé à travers le branchement 15 permet d'assurer la pressurisation du premier réservoir de la même manière que dans le premier mode de réalisation. En même temps, toutefois, le débit du premier ergol qui n'est pas dérivé à travers le branchement 15, mais qui continue son écoulement à travers le premier circuit 6 vers la chambre propulsive 5, contribue aussi au refroidissement du deuxième ergol par transfert de chaleur dans le deuxième échangeur de chaleur 17. Ce refroidissement supplémentaire permet de renforcer les avantages du refroidissement du deuxième ergol par le premier échangeur de chaleur 14.

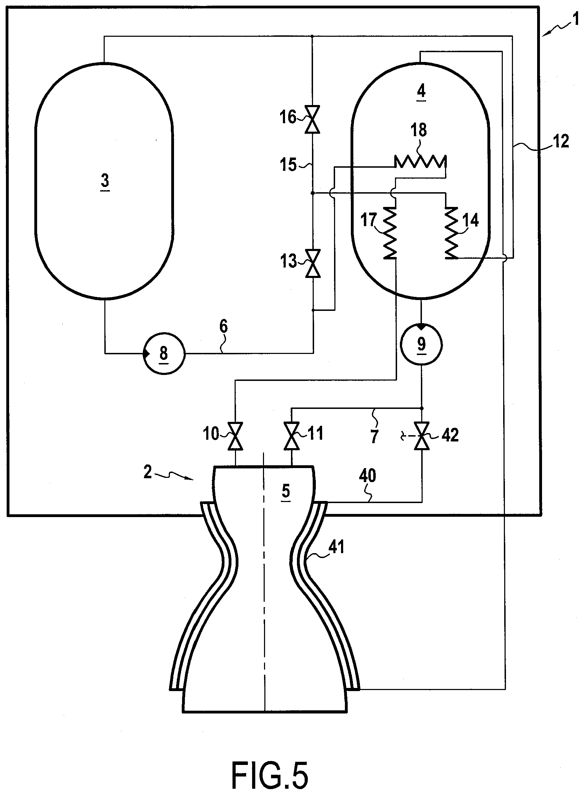

Un engin 1 suivant un troisième mode de réalisation est illustré sur la figure 5. Le système d'alimentation du moteur-fusée 2 de cet autre engin 1 diffère de celui du deuxième mode de réalisation en ce qu'il comporte un troisième échangeur de chaleur 18 directement en amont du deuxième échangeur de chaleur 17 dans le premier circuit d'alimentation 6. Les autres éléments de cet engin 1 sont essentiellement équivalents à ceux du deuxième mode de réalisation, et reçoivent les mêmes chiffres de référence.

Comme les premier et deuxième échangeurs de chaleur 14,17, ce troisième échangeur de chaleur 18 est également intégré dans le deuxième réservoir 4. Toutefois, contrairement à ces autres échangeurs de chaleur 14, 17, il n'est pas intégré dans l'entonnoir 30, mais au-dessus de celui-ci, pour ainsi mieux refroidir le deuxième ergol au coeur de ce deuxième réservoir 4 et mieux compenser son réchauffement par absorption de chaleur à travers les parois du deuxième réservoir 4.

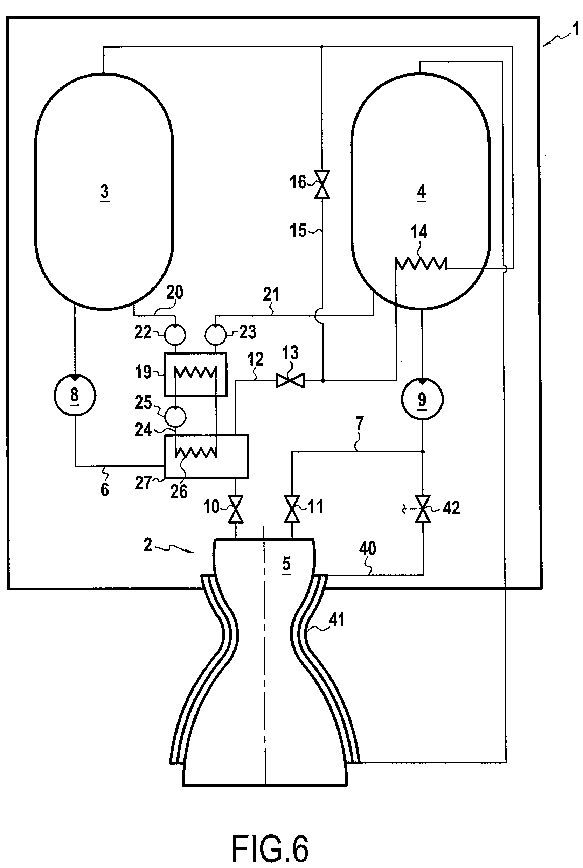

Un engin 1 suivant un quatrième mode de réalisation est illustré sur la figure 6. Cet autre engin 1 diffère de celui du premier mode de réalisation en ce qu'il comporte aussi une pile à combustible 19, connectée aux réservoirs 3,4 à travers de circuits d'alimentation respectifs 20, 21 équipés de micropompes 22,23. Les circuits 20,21 permettent ainsi d'alimenter la pile à combustible 19 avec une fraction des ergols contenus dans les réservoirs 3,4, afin de générer de l'électricité pour l'alimentation électrique d'équipements embarqués à bord de l'engin 1. Comme la réaction chimique des ergols dans la pile à combustible 19 génère normalement aussi de la chaleur pouvant perturber son fonctionnement si elle n'est pas correctement évacuée, cette pile à combustible 19 est aussi équipée d'un circuit de refroidissement 24 avec une dispositif de circulation forcée 25. Grâce à la pression interne des réservoirs 3,4, les micropompes 22,23 peuvent toutefois être éventuellement substituées par des vannes à débit variable, la pression interne des réservoirs 3,4 pouvant alors suffire à assurer l'écoulement des ergols vers la pile à combustible 19.

Le circuit de refroidissement 24 contient un fluide de refroidissement, comme par exemple de l'hélium, que le dispositif de circulation forcée 25 peut faire circuler afin de transférer de la chaleur de la pile de combustible 19 vers un échangeur de chaleur 26. Alternativement, toutefois, d'autres moyens d'assurer la circulation du fluide de refroidissement dans le circuit 24 peuvent être envisagés, comme par exemple un thermosiphon. Cet autre échangeur de chaleur 26 est intégré dans le premier circuit d'alimentation 6 du moteur-fusée 2, de manière à transférer cette chaleur vers le premier ergol. Dans le mode de réalisation illustré, cet autre échangeur de chaleur 26 est intégré dans un réservoir-tampon 27 en amont du branchement 12, le volume du premier ergol qui est contenu dans ce réservoir-tampon 27 offre une capacité importante d'absorption de chaleur, même quand la circulation de ce premier ergol dans le circuit 6 est à l'arrêt. Un volume Vₜ de 30 l d'hydrogène liquide dans le réservoir-tampon 27 peut ainsi absorber une puissance calorifique P_{c} de 100 W pendant une heure avec une montée en température ΔT d'uniquement 17 K de l'hydrogène liquide. D'autres arrangements de l'échangeur de chaleur 26 dans le premier circuit 6 sont toutefois également envisageables. Les autres éléments de cet engin 1 sont essentiellement équivalents à ceux du premier mode de réalisation, et reçoivent les mêmes chiffres de référence.

Bien que dans ces quatre modes de réalisation la circulation des ergols vers la chambre propulsive soit assurée par des pompes, des moyens alternatifs, tels que par exemple une pressurisation des réservoirs d'ergols, sont également envisageables.

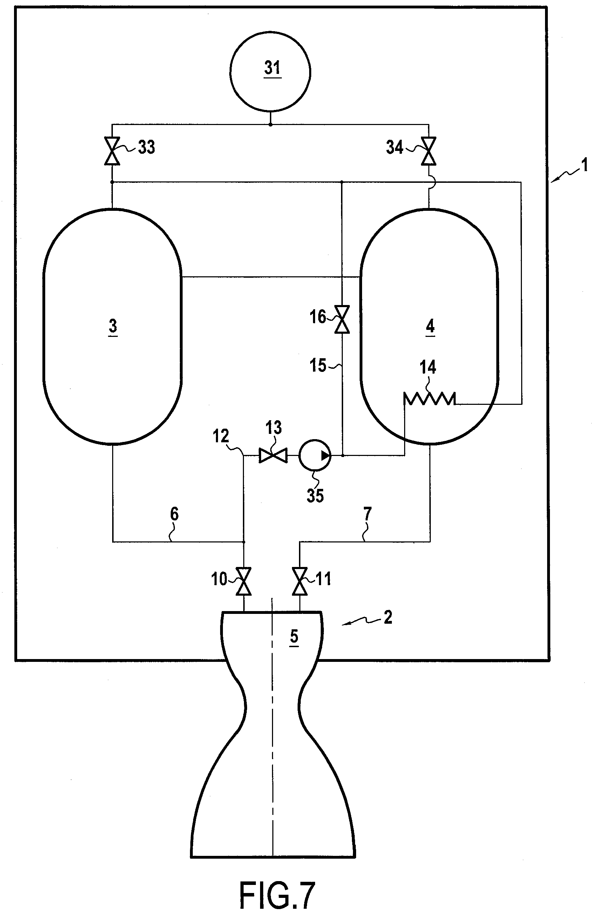

Ainsi, dans un cinquième mode de réalisation illustré sur la figure 7, et analogue au premier mode de réalisation, les pompes sont remplacées par un réservoir 31 de gaz pressurisé, par exemple d'hélium, connecté aux réservoirs 3,4 d'ergols à travers de vannes 33,34 respectives. Ainsi, en fonctionnement, la pression de l'hélium du réservoir de gaz pressurisé 31 pousse les ergols, à travers leurs circuits d'alimentation 6,7 respectifs, vers la chambre propulsive 5. Afin de permettre la réinjection en phase gazeuse au sommet du premier réservoir 3 de l'hydrogène dérivé à travers le branchement 12, ce branchement 12 comprend, en amont de l'échangeur de chaleur 14 et du conduit de contournement 15, un dispositif de circulation forcée 35. Comme dans ce mode de réalisation le deuxième circuit d'alimentation 7 ne comporte pas de pompe en aval du deuxième réservoir 4, la prévention de la cavitation n'y est pas une priorité, contrairement à la compensation de l'éventuel réchauffement du deuxième ergol dans le deuxième réservoir 4. En conséquence, dans ce mode de réalisation, l'échangeur de chaleur 14 n'est pas situé dans un entonnoir de sortie du deuxième réservoir 4, mais peut être situé plus centralement dans ce deuxième réservoir 4, de manière à plus efficacement refroidir le volume du deuxième ergol contenu dans ce deuxième réservoir. Les autres éléments de cet engin 1 sont essentiellement équivalents à ceux du premier mode de réalisation, et reçoivent les mêmes chiffres de référence, même si dans ce mode de réalisation le deuxième circuit d'alimentation 7 ne comporte pas de branchement de retour vers le sommet du deuxième réservoir 4.

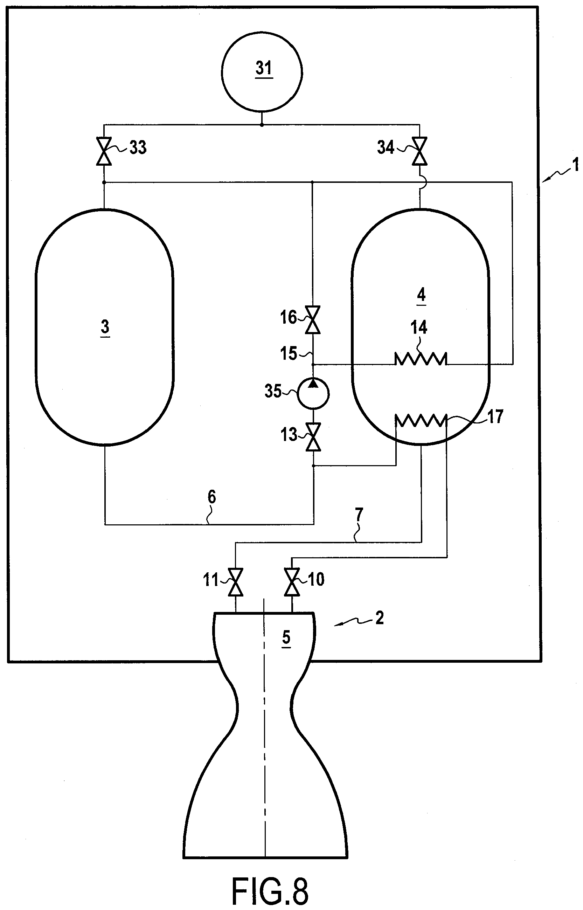

Dans un sixième mode de réalisation illustré sur la Figure 8 et essentiellement analogue au deuxième mode de réalisation, les pompes de ce deuxième mode de réalisation sont aussi remplacées par un réservoir 31 de gaz pressurisé, par exemple d'hélium, connecté, aux réservoirs 3,4 d'ergols à travers de vannes 33,34 respectives. Comme dans le cinquième mode de réalisation, un dispositif de circulation forcée 35 en amont de l'échangeur de chaleur 14 et du conduit de contournement 15 assure la circulation de retour du premier ergol, à travers le branchement 12, vers le premier réservoir 3. Les échangeurs de chaleur 14, 17 peuvent également être situés au sein du deuxième réservoir 4, plutôt que dans un entonnoir de sortie. Les autres éléments de cet engin 1 sont essentiellement équivalents à ceux du deuxième mode de réalisation, et reçoivent les mêmes chiffres de référence, même si dans ce mode de réalisation le deuxième circuit d'alimentation 7 ne comporte pas de branchement de retour vers le sommet du deuxième réservoir 4.

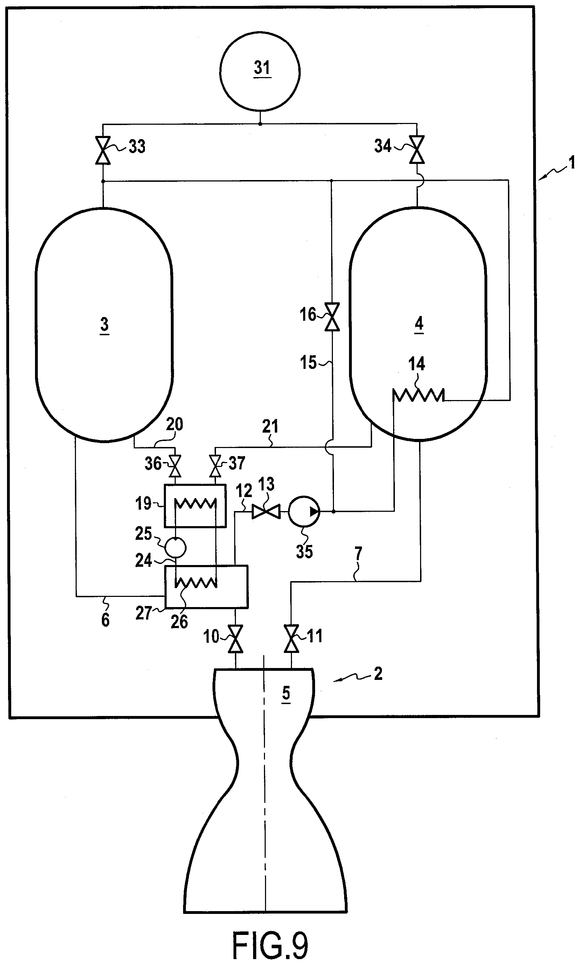

Dans un septième mode de réalisation illustré sur la Figure 9 et essentiellement analogue au quatrième mode de réalisation, les pompes de ce deuxième mode de réalisation sont aussi remplacées par un réservoir 31 de gaz pressurisé, par exemple d'hélium, connecté, respectivement, aux réservoirs 3,4 d'ergols à travers de vannes 33,34. La pressurisation des ergols dans les réservoirs 3, 4 permet également de s'affranchir de micropompes pour l'alimentation en ergols de la pile à combustible 19, alimentation qui est régulée dans ce mode de réalisation par des vannes 36,37 à débit variable dans les circuits 20,21. Comme dans les cinquième et sixième modes de réalisation, un dispositif de circulation forcée 35 en amont de l'échangeur de chaleur 14 et du conduit de contournement 15 assure la circulation de retour du premier ergol, à travers le branchement 12, vers le premier réservoir 3. L'échangeur de chaleur 14 peut également être situé au sein du deuxième réservoir 4, plutôt que dans un entonnoir de sortie. Les autres éléments de cet engin 1 sont essentiellement équivalents à ceux du quatrième mode de réalisation, et reçoivent les mêmes chiffres de référence, même si dans ce mode de réalisation le deuxième circuit d'alimentation 7 ne comporte pas de branchement de retour vers le sommet du deuxième réservoir 4.

Quoique la présente invention ait été décrite en se référant à des exemples de réalisation spécifiques, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Ainsi, par exemple, dans une variante du septième mode de réalisation, l'engin pourrait incorporer un branchement de réinjection du deuxième ergol en phase gazeuse dans le deuxième réservoir, comme dans les quatre premiers modes de réalisation, avec un dispositif de circulation forcée de ce deuxième ergol en phase gazeuse. Par conséquent, la description et les dessins doivent être considérés dans un sens illustratif plutôt que restrictif.

## Revendications

1. Système d'alimentation d'un moteur-fusée (2) en ergols, comprenant :
un premier réservoir (3) ;
un deuxième réservoir (4) ;
un premier circuit d'alimentation (6) connecté au premier réservoir (3) pour l'alimentation du moteur-fusée (2) en un premier ergol liquide
un deuxième circuit d'alimentation (7) connecté au deuxième réservoir (4) pour l'alimentation du moteur-fusée (2) en un deuxième ergol liquide au point de saturation sensiblement plus élevé que le premier ergol liquide ;
**caractérisé en ce que** ledit premier circuit d'alimentation (6) comprend, en aval dudit premier réservoir (3), un branchement (12) traversant un premier échangeur de chaleur (14) intégré dans le deuxième réservoir (4), ledit branchement (12) étant aussi connecté audit premier réservoir (3) en aval du premier échangeur de chaleur (14).

2. Système d'alimentation suivant la revendication 1, dans lequel ledit deuxième circuit d'alimentation (7) comporte une pompe (9).

3. Système d'alimentation suivant la revendication 1 ou 2, dans lequel ledit branchement (12) comprend en outre un conduit (15) de contournement dudit premier échangeur de chaleur (14).

4. Système d'alimentation suivant l'une quelconque des revendications 1 à 3, dans lequel ledit premier circuit d'alimentation (6) comprend une pompe (8) en amont dudit branchement (12).

5. Système d'alimentation suivant l'une quelconque des revendications 1 à 3, dans lequel ledit branchement (12) comprend un dispositif (35) de circulation forcée.

6. Système d'alimentation suivant l'une quelconque des revendications précédentes, dans lequel ledit premier échangeur de chaleur (14) est intégré dans un entonnoir (30) de sortie du deuxième réservoir (4).

7. Système d'alimentation suivant l'une quelconque des revendications précédentes, dans lequel le premier circuit (6) comprend en outre au moins un deuxième échangeur de chaleur (17) intégré dans le deuxième réservoir (4).

8. Système d'alimentation suivant la revendication 7, dans lequel ledit deuxième échangeur de chaleur (17) est intégré dans un entonnoir (30) de sortie du deuxième réservoir (4).

9. Système d'alimentation suivant la revendication 8, dans lequel ledit premier circuit comprend en outre un troisième échangeur de chaleur (18) intégré dans le deuxième réservoir (4), en amont du deuxième échangeur de chaleur (17).

10. Système d'alimentation suivant l'une quelconque des revendications précédentes, dans lequel le premier circuit d'alimentation (6) comprend en outre, en amont dudit branchement de retour (12), un autre échangeur de chaleur (26) apte à être connecté à une source de chaleur (19).

11. Système d'alimentation suivant la revendication 10, dans lequel ledit premier circuit d'alimentation (6) comprend en outre un réservoir-tampon (27), ledit autre échangeur de chaleur (26) étant intégré dans ledit réservoir tampon (27).

12. Procédé d'alimentation d'un moteur-fusée (2) en ergols liquides, comprenant les étapes suivantes :
extraction d'un débit d'un premier ergol liquide d'un premier réservoir (3) à travers un premier circuit d'alimentation (6), extraction d'un débit d'un deuxième ergol liquide d'un deuxième réservoir (4) à travers un deuxième circuit d'alimentation (7), et **caractérisé en ce que** le procédé comprend les étapes suivantes:
dérivation d'un partie dudit débit du premier ergol liquide à travers un branchement (12) du premier circuit d'alimentation (6),
passage à l'état gazeux du premier ergol liquide dérivé à travers ledit branchement (12) dans un échangeur de chaleur (14) intégré dans le deuxième réservoir (4) contenant le deuxième ergol liquide à une température plus élevée que la température de saturation du premier ergol liquide dans le branchement (12).

13. Procédé d'alimentation suivant la revendication 12, dans lequel au moins une partie du premier ergol liquide dérivé à travers ledit branchement (12) est réinjectée, à l'état gazeux, dans le premier réservoir (3).

14. Procédé d'alimentation suivant l'une quelconque des revendications 12 ou 13, dans lequel le premier ergol liquide est de l'hydrogène liquide et le deuxième ergol liquide est de l'oxygène liquide.

## Patentansprüche

1. System zum Versorgen eines Raketentriebwerks (2) mit Treibmitteln, umfassend:
einen ersten Tank (3),
einen zweiten Tank (4),
einen ersten Versorgungskreislauf (6), der mit dem ersten Tank (3) verbunden ist, um das Raketentriebwerk (2) mit einem ersten flüssigen Treibmittel zu versorgen,
einen zweiten Versorgungskreislauf (7), der mit dem zweiten Tank (4) verbunden ist, um das Raketentriebwerk (2) mit einem zweiten flüssigen Treibmittel zu versorgen, das einen Sättigungspunkt aufweist, der wesentlich höher ist als der des ersten flüssigen Treibmittels,
**dadurch gekennzeichnet, dass** der erste Versorgungskreislauf (6) stromabwärts des ersten Tanks (3) eine Anschlussleitung (12) umfasst, die durch einen ersten Wärmetauscher (14) verläuft, der in den zweiten Tank (4) integriert ist, wobei die Anschlussleitung (12) stromabwärts des ersten Wärmetauschers (14) auch mit dem ersten Tank (3) verbunden ist.

2. Versorgungssystem nach Anspruch 1, wobei der zweite Versorgungskreislauf (7) eine Pumpe (9) aufweist.

3. Versorgungssystem nach Anspruch 1 oder 2, wobei die Anschlussleitung (12) ferner eine Bypassleitung (15) des ersten Wärmetauschers (14) umfasst.

4. Versorgungssystem nach einem der Ansprüche 1 bis 3, wobei der erste Versorgungskreislauf (6) stromaufwärts der Anschlussleitung (12) eine Pumpe (8) umfasst.

5. Versorgungssystem nach einem der Ansprüche 1 bis 3, wobei die Anschlussleitung (12) eine Zwangsflussvorrichtung (35) umfasst.

6. Versorgungssystem nach einem der vorhergehenden Ansprüche, wobei der erste Wärmetauscher (14) in einen Auslasstrichter (30) des zweiten Tanks (4) integriert ist.

7. Versorgungssystem nach einem der vorhergehenden Ansprüche, wobei der erste Kreislauf (6) ferner mindestens einen zweiten Wärmetauscher (17) umfasst, der in den zweiten Tank (4) integriert ist.

8. Versorgungssystem nach Anspruch 7, wobei der der zweite Wärmetauscher (17) in einen Auslasstrichter (30) des zweiten Tanks (4) eingebaut ist.

9. Versorgungssystem nach Anspruch 8, wobei der erste Kreislauf ferner einen dritten Wärmetauscher (18) umfasst, der stromaufwärts des zweiten Wärmetauschers (17) in den zweiten Tank (4) integriert ist.

10. Versorgungssystem nach einem der vorhergehenden Ansprüche, wobei der erste Versorgungskreislauf (6) ferner stromaufwärts der Rücklaufanschlussleitung (12), einen anderen Wärmetaucher (26) umfasst, der mit einer Wärmequelle (19) verbunden werden kann.

11. Versorgungssystem nach Anspruch 10, wobei der erste Versorgungskreislauf (6) ferner einen Puffertank (27) umfasst, wobei der andere Wärmetauscher (26) in den Puffertank (27) integriert ist.

12. Verfahren zum Versorgen eines Raketentriebwerks (2) mit Treibmitteln, umfassend die folgenden Schritte:
Entnehmen einer Menge eines ersten flüssigen Treibmittels aus einem ersten Tank (3) über einen ersten Versorgungskreislauf (6), Entnehmen einer Menge eines zweiten flüssigen Treibmittels aus einem zweiten Tank (4) über einen zweiten Versorgungskreislauf (7), und **dadurch gekennzeichnet, dass** das Verfahren die folgenden Schritte umfasst:
Ableiten eines Teils der ersten Menge an erstem flüssigem Treibmittel über eine Anschlussleitung (12) des ersten Versorgungskreislaufs (6),
Übertragen in gasförmigem Zustand des abgeleiteten ersten flüssigen Treibmittels durch die Anschlussleitung (12) in einen Wärmetauscher (14), der in den zweiten Tank (4) integriert ist, der das zweite flüssige Treibmittel mit einer Temperatur enthält, die höher ist als die Sättigungstemperatur des ersten flüssigen Treibmittels in der Anschlussleitung (12).

13. Versorgungsverfahren nach Anspruch 12, wobei mindestens ein Teil des ersten durch die Anschlussleitung (12) abgeleiteten flüssigen Treibmittels in gasförmigem Zustand in den ersten Tank (3) zurückgeführt wird.

14. Versorgungsverfahren nach einem der Ansprüche 12 oder 13, wobei das erste flüssige Treibmittel flüssiger Wasserstoff ist und das zweite flüssige Treibmittel flüssiger Sauerstoff ist.

## Claims

1. A system for feeding a rocket engine (2) with propellants, the system comprising:
• a first tank (3);
• a second tank (4);
• a first feed circuit (6) connected to the first tank (3) for feeding a first liquid fuel to the rocket engine (2) ; and
• a second feed circuit (7) connected to the second tank (4) for feeding a second liquid propellant to the rocket engine (2), the second liquid propellant having a saturation point substantially higher than the first liquid propellant;
the system being **characterized in that** said first feed circuit (6) comprises, downstream from said first tank (3), a branch (12) passing through a first heat exchanger (14) incorporated in the second tank (4) said branch (12) being also connected to said first tank (3) downstream from the first heat exchanger (14).

2. A feed system according to claims 1 or 2, wherein the second feed circuit (7) includes a pump (9).

3. A feed system according to any one of claims 1 to 3, wherein said branch (12) further includes a bypass duct (15) bypassing said first heat exchanger (14).

4. A feed system according to claim 1, wherein said feed circuit (6) includes a pump (8) upstream from said branch (12).

5. A feed system according to any one of claims 1 to 3, wherein said branch (12) includes a forced flow device (35).

6. A feed system according to any one of the preceding claims, wherein said first heat exchanger (14) is incorporated in an outlet funnel (30) from the second tank (4).

7. A feed system according to any one of the preceding claims, wherein the first circuit (6) further includes at least one second heat exchanger (17) incorporated in the second tank (4).

8. A feed system according to claim 7, wherein said second heat exchanger (17) is incorporated in an outlet funnel (30) from the second tank (4).

9. A feed system according to any one of the preceding claims, wherein said first circuit further includes a third heat exchanger (18) incorporated in the second tank (4), upstream from the second heat exchanger (17).

10. A feed system according to claim 1, wherein the first feed circuit (6) further includes, upstream from said return branch (12), another heat exchanger (26) suitable for being connected to a heat source (19).

11. A feed system according to claim 10, wherein said first feed circuit (6) further includes a buffer tank (27), said other heat exchanger (26) being incorporated in said buffer tank (27).

12. A method of feeding a rocket engine (2) with liquid propellants, the method comprising the following steps:
• extracting a flow of a first liquid propellant from a first tank (3) through a first feed circuit (6);
• extracting a flow of a second liquid propellant through a second feed circuit (7), and **characterized in that** the method comprises the following steps;
• bleeding a portion of said flow of the first liquid propellant through a branch (12) of the first feed circuit (6);
• passing the first liquid propellant bled through said branch (12) into the gaseous state in a heat exchanger (14) incorporated in the second tank (4) containing the second liquid propellant at a temperature higher than the saturation temperature of the first liquid propellant in the branch (12).

13. A feed method according to claim 12, wherein at least a portion of the first liquid propellant bled through said branch (12) is reinjected in the gaseous state into the first tank (3).

14. A feed method according to claim 12, wherein the first liquid propellant is liquid hydrogen and the second liquid propellant is liquid oxygen.
